## Europäisches Patentamt

(19) **European Patent Office**

**Office européen des brevets**

(11) Veröffentlichungsnummer: **0 028 722**
**B1**

(12) **EUROPÄISCHE PATENTSCHRIFT**

(45) Veröffentlichungstag der Patentschrift:
14.03.84

(51) Int. Cl.³: **H 02 P 8/00**, G 05 B 19/04

(21) Anmeldenummer: 80106261.3

(22) Anmeldetag: 15.10.80

(54) Schaltungsanordnung für die ständige Betriebsüberwachung und Fehlerdiagnose der Steuerschaltung für einen Schrittschaltmotor.

(30) Priorität: 10.11.79 DE 2945458

(43) Veröffentlichungstag der Anmeldung:
20.05.81 Patentblatt 81/20

(45) Bekanntmachung des Hinweises auf die Patenterteilung:
14.03.84 Patentblatt 84/11

(84) Benannte Vertragsstaaten:
DE FR GB

(56) Entgegenhaltungen:
DE - A - 1 588 266
GB - A - 2 018 467
US - A - 3 359 474

(73) Patentinhaber: International Business Machines Corporation, Old Orchard Road, Armonk, N.Y. 10504 (US)

(72) Erfinder: Tandjung, Halim, Burgenstrasse 6D, D-7031 Gärtringen 2 (DE)
Erfinder: Landrock, Jürgen, Maurener Strasse 59, D-7031 Altdorf (DE)
Erfinder: Perske, Manfred, Sommerhofenstrasse 174, D-7032 Sindelfingen (DE)

(74) Vertreter: Gaugel, Heinz, Dipl.-Ing., Schönaicher Strasse 220, D-7030 Böblingen (DE)

## Schaltungsanordnung für die ständige Betriebsüberwachung und Fehlerdiagnose der Steuerschaltung für einen Schrittschaltmotor

Die Erfindung betrifft eine Schaltungsanordnung für die ständige Betriebsüberwachung und Fehlerdiagnose der Steuerschaltung für einen Schrittschaltmotor, dessen Wicklungen (S1, S2, S3, S4) über eine von Schrittgeberimpulsen angesteuerte Steuerlogik (1) und Treiberstufen (2) gegeneinander phasenverschobene Schrittschaltimpulse zugeführt werden.

Im Stand der Technik ist aus der US-A-3 359 474 eine Überwachungsschaltung für eine Schrittschaltmotor-Steuerung mit einer mehrstufigen aus mehreren UND-Gliedern bestehenden Vergleichsschaltung bekannt, in der die Ausgangssignale der Steuerlogik mit vom Rotor des Motors abgeleiteten Positionssignalen verglichen werden. Die Steuerlogik liefert nur dann den nächsten Schrittschaltimpuls, wenn der Schrittschaltmotor durch den vorangegangenen Schrittschaltimpuls um einen Schritt weitergeschaltet worden ist. Damit kann jeder Fortschaltfehler sofort festgestellt werden.

Ferner ist aus der GB-A-2 018 467 eine Steuerschaltung für einen Schrittschaltmotor bekannt, dessen Phasenwicklungen von einem Prozessor in jeweils vorgegebener in einem Speicher abgespeicherter oder diesem von außen zugeführten Reihenfolge für eine Rotation in der einen oder anderen Richtung über je eine Verriegelungsschaltung für jede Phasenwicklung angesteuert werden. Der Prozessor überwacht dabei auch das richtige Funktionieren der Steuerung und setzt die Anordnung still, wenn irgendein Fehler, z. B. im Speicher, im Prozessor, in den Verriegelungsschaltungen oder den Phasenwicklungen auftritt.

Schrittschaltmotoren müssen also mit bestimmten Impulsfolgen betrieben werden. Diese Impulsfolgen werden normalerweise durch eine Steuerlogik oder eine Logikschaltung erzeugt, wie sie in einer bekanntgewordenen Ausführungsform, beispielsweise in der DE-B-1 958 032, offenbart ist. Die dabei erzeugten phasenverschobenen Schrittschaltimpulse werden anschließend über Treiberstufen, die meist als Transistorschalter aufgebaut sind, den einzelnen Phasenwicklungen des Schrittschaltmotors zugeführt. Da es bei derartigen Schrittschaltmotoren darauf ankommt, daß sie nicht nur immer fehlerfrei arbeiten, sondern daß gegebenenfalls auftretende Fehler nach Art und Ort sofort erkannt werden können, soll durch die Erfindung eine Schaltungsanordnung geschaffen werden, bei der durch ständige Betriebsüberwachung der Steuerschaltung selbst jederzeit festgestellt werden kann, ob bei Auftreten eines Fehlers dieser in der Steuerlogik oder aber in einer der Treiberstufen liegt, wobei in weiterer Ausgestaltung der Erfindung feststellbar sein soll, ob es sich beim Ausfall einer der Treiberstufen um eine Unterbrechung oder um einen Kurzschluß handelt. Dies wird gemäß der Erfindung dadurch erreicht, daß ein die Sollwerte der Schrittschaltimpulse in logischer Form darstellender mehrstufiger Ringzähler vorgesehen ist, dessen Grundeinstellung vor dem Start des Motors aus den den einzelnen Stufen des Ringzählers zugeführten Ausgangssignalen der Steuerlogik und einem weiteren, den Stufen gemeinsam zugeleiteten Startsignal abgeleitet ist und dessen taktgesteuerte Fortschaltung aus den am Eingang der Steuerlogik liegenden Schrittgeberimpulsen abgeleitet ist, daß ferner eine durch die logischen Ausgangssignale des Ringzählers einerseits und die Ausgangssignale der Steuerlogik bzw. die von den Treiberstufen abgeleiteten logischen Ausgangssignale andererseits angesteuerte mehrstufige Vergleichsschaltung vorgesehen ist und daß diese Vergleichsschaltung durch von den Schrittgeberimpulsen abgeleitete Taktimpulse taktgesteuert ist.

Vorzugsweise ist die Anordnung dabei so getroffen, daß zur ständigen Überprüfung des Logikteils die die Steuerspannungen für die Treiberstufen liefernden Ausgänge des Logikteils jeweils mit einer der Stufen der Vergleichsschaltung verbunden sind, daß ferner die Ausgänge der jeweils entsprechenden Stufen des Ringzählers an den gleichen Stufen der Vergleichsschaltung angeschlossen sind und daß der Ringzähler über Schrittgeberimpulse unmittelbar fortschaltbar ist, während die Vergleichsschaltung durch die gleichen Schrittgeberimpulse über ein Verzögerungsglied taktgesteuert ist.

Von besonderem Vorteil ist es dabei, daß zur ständigen Überprüfung der Treiberstufen des Treiberteiles an den Treiberstufen selbst abnehmbare, deren Schaltzustand kennzeichnende Signale nach Pegelumsetzung in entsprechende logische Werte den entsprechenden Stufen der Vergleichsschaltung zuführbar sind, daß ferner die Ausgänge der jeweils entsprechenden Stufen des Ringzählers an den gleichen Stufen der Vergleichsschaltung angeschlossen sind, daß dabei die einzelnen Stufen des Ringzählers durch die Schrittgeberimpulse fortschaltbar sind und daß dabei die Vergleichsschaltung durch die gleichen Schrittgeberimpulse über ein Verzögerungsglied taktgesteuert ist. Als besonders vorteilhaft hat es sich erwiesen, daß zur Fehlerdiagnose eine Auswerteschaltung mit Anzeigevorrichtung vorgesehen ist, in der aus einem logischen Vergleich der im Ringzähler liegenden logischen Werte jeder Stufe und den nach Pegelumsetzung von den einzelnen Treiberstufen abgeleiteten logischen Werten für jede Treiberstufe unmittelbar eine von mehreren möglichen Fehlerbedingungen erkennbar und anzeigbar ist.

Die Erfindung wird nunmehr anhand von Ausführungsbeispielen in Verbindung mit den Zeichnungen im einzelnen näher erläutert. Die für schutzfähig erachteten Merkmale der Erfindung sind den Patentansprüchen im einzelnen zu entnehmen. In den Zeichnungen zeigt

Fig. 1 rein schematisch eine Steuerschaltung für einen Schrittschaltmotor,

Fig. 2 schematisch Impulsdiagramme für die Ansteuerung des Schrittschaltmotors, der daraus abgeleiteten logischen Signale und ebenfalls schematisch die jeweilige Position des Ringzählers,

Fig. 3 den den Anlauf eines Schrittschaltmotors darstellenden Teil der erfindungsgemäßen Schaltungsanordnung,

Fig. 4 rein schematisch das Prinzip der Überprüfung des Logikteils,

Fig. 5 rein schematisch das Prinzip der Überprüfung der Treiberstufen und

Fig. 6 rein schematisch das Prinzip der Fehlerdiagnose mit Hilfe eines Bit-Mustervergleichs.

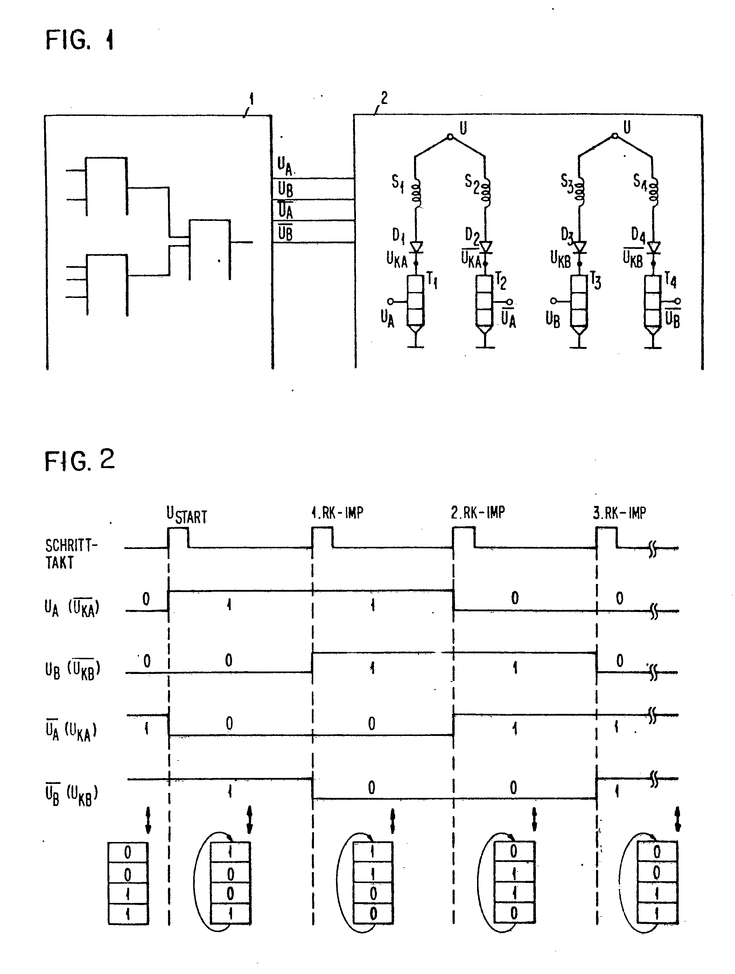

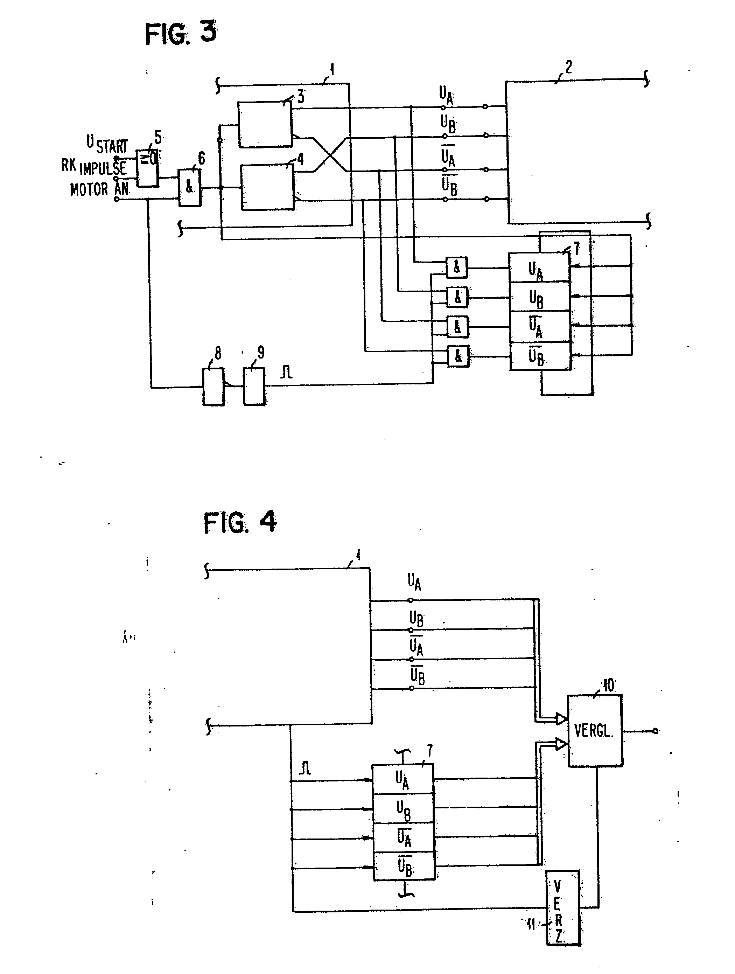

Fig. 1 zeigt in stark vereinfachter Form eine typische Ansteuerschaltung für einen Schrittschaltmotor. Die nur skizzenhaft angedeutete Steuerlogik 1, die im Zusammenhang mit Fig. 3 noch näher erläutert wird, liefert ausgangsseitig vier gegeneinander phasenverschobene Spannungen $U_A$, $U_B$, $\bar{U}_A$ und $\bar{U}_B$, die einem Treiberteil mit vier Treiberstufen zugeführt werden. Selbstverständlich muß die Anzahl der hier abgegebenen phasenverschobenen Schrittschaltimpulse und die Anzahl der Treiberstufen der Anzahl der Phasenwicklungen des Schrittschaltmotors entsprechen. Der Treiberteil 2 enthält dabei die vier Treibertransistoren T1, T2, T3 und T4, die mit den jeweiligen Phasenwicklungen S1, S2, S3 und S4 über Dioden D1, D2, D3 und D4 zwischen einer Spannungsquelle U und Masse in Reihe geschaltet sind. Die Ansteuerung der Treibertransistoren T1 bis T4 erfolgt dabei jeweils über die Basiselektroden der Transistoren, und an den Kollektoren der Treibertransistoren T1 bis T4 treten dann die Potentiale $U_{KA}$, $\bar{U}_{KA}$, $U_{KB}$ und $\bar{U}_{KB}$ auf. Aus Fig. 2 erkennt man den Ablauf der einzelnen Impulse und Spannungen. Wie im Zusammenhang mit Fig. 3 noch näher gezeigt werden soll, ist die Startposition des Ringzählers vor dem Startimpuls in der in Fig. 2 gzeigten Weise festgelegt, nämlich von oben nach unten 0011. Beim Auftreten des Startimpulses $U_{Start}$ wird der Ringzähler um Eins weitergeschaltet, und es treten die im ersten Zeitabschnitt angegebenen Potentiale für $U_A$ ($\bar{U}_{KA}$), $U_B$ ($\bar{U}_{KB}$), $\bar{U}_A$ ($U_{KA}$), $\bar{U}_B$ ($U_{KB}$) auf. Man sieht, daß die im ersten Taktintervall auftretenden Potentiale genau der um einen Impuls weitergeschalteten Stellung in dem Ringzähler entsprechen. Gleiches trifft auch für die nachfolgenden Impuls- oder Taktintervalle zu.

Wie aus Fig. 3 im einzelnen erkennbar, enthält die Steuerlogik 1 zwei bistabile Kippschaltungen 3 und 4, die über ein ODER-Glied 5 und ein UND-Glied 6 angesteuert werden. Der Startimpuls $U_{Start}$ wird über das ODER-Glied 5 und das UND-Glied 6 den beiden bistabilen Kippschaltungen 3 und 4 zugeführt. Im Ruhezustand treten keine Rückkopplungsimpulse am zweiten Eingang des ODER-Gliedes 5 auf, und der den Motor einschaltende Impuls ist an der Klemme »Motor an« nicht vorhanden, was einer logischen Null entspricht. Die an den bistabilen Kippschaltungen 3 und 4 auftretenden logischen Ausgangssignale $U_A$, $U_B$, $\bar{U}_A$ und $\bar{U}_B$ werden über UND-Glieder einem vierstufigen Ringzähler zugeführt. Die zweiten Eingänge dieser UND-Glieder sind über eine Inverterstufe 8 und eine monostabile Kippschaltung 9 an der Eingangsklemme für das Einschaltsignal für den Motor »Motor an« angeschlossen. Solange dieses Signal nicht anliegt, was einer binären Null entspricht, wird diese, da das Gerät insgesamt einmal eingeschaltet worden ist, beim Einschalten invertiert und betätigt eine monostabile Kippschaltung, die einen einmaligen Impuls an die zweiten Eingänge der UND-Glieder abgibt und damit den Ringzähler 7 in seine Ausgangsposition einstellt. Man erkennt sofort, daß beim Auftreten des Impulses »Motor an«, der einer logischen Eins entspricht, die UND-Glieder wegen der Inverterwirkung der Inverterstufe 8 gesperrt werden. Die Ausgangssignale der Steuerlogik werden zur Ansteuerung dem Treiberteil 2 zugeführt. Man erkennt ferner, daß sowohl der Startimpuls als auch die Rückkopplungsimpulse über das ODER-Glied 5 an dem UND-Glied 6 liegen, das vor Einschalten, das heißt vor Auftreten des Motorstart-Impulses »Motor an« gesperrt ist. Mit Auftreten des Motorstart-Impulses tritt, wie Fig. 2 deutlich zeigt, das Signal $U_{Start}$ auf, wodurch der erste Schrittgeberimpuls erzeugt wird, der den beiden bistabilen Kippschaltungen 3 und 4 und zur Fortschaltung außerdem dem Ringzähler 7 zugeführt wird. Die Weiterschaltung des Ringzählers erfolgt von da ab über die dem ODER-Glied 5 zugeführten, aus der Schaltung selbst abgeleiteten Rückkopplungsimpulse, deren Ableitung selbst nicht gezeigt ist.

Fig. 4 zeigt nun das Prinzip der Überprüfung des Logikteils 1. Die am Ausgang des Logikteils 1 auftretenden logischen Ausgangssignale, die hier wiederum mit $U_A$, $U_B$, $\bar{U}_A$ und $\bar{U}_B$ bezeichnet sind, werden einer vierstufigen Vergleichsschaltung 10 zugeleitet. In gleicher Weise werden die im Ringzähler 7 für jedes Taktintervall eingespeicherten Sollwerte $U_A$, $U_B$, $\bar{U}_A$ und $\bar{U}_B$ den gleichen entsprechenden Stufen der Vergleichsschaltung 10 zugeführt. Gleichzeitig werden die Schrittgeberimpulse als Taktimpulse einmal dem Ringzähler 7 zur Fortschaltung und über ein Verzögerungsglied 11 zur Taktsteuerung der Vergleichsschaltung 10 zugeführt.

Diese Verzögerung ist erforderlich, da auch der Ringzähler 7 bei seiner Fortschaltung eine gewisse Verzögerung liefert. Durch Vergleich der einzelnen logischen Signale, das heißt der Ausgangssignale der Steuerlogik 1 und der die Sollwerte darstellenden Ausgangssignale des Ringzählers 7 in der Vergleichsschaltung 10, läßt sich dann feststellen, ob in der Steuerlogik 1 ein Fehler aufgetreten ist. Ein derartiger Fehler wird in jeder Stufe der Vergleichsschaltung 10 dadurch angezeigt, daß die miteinander zu vergleichenden logischen Werte nicht gleich sind.

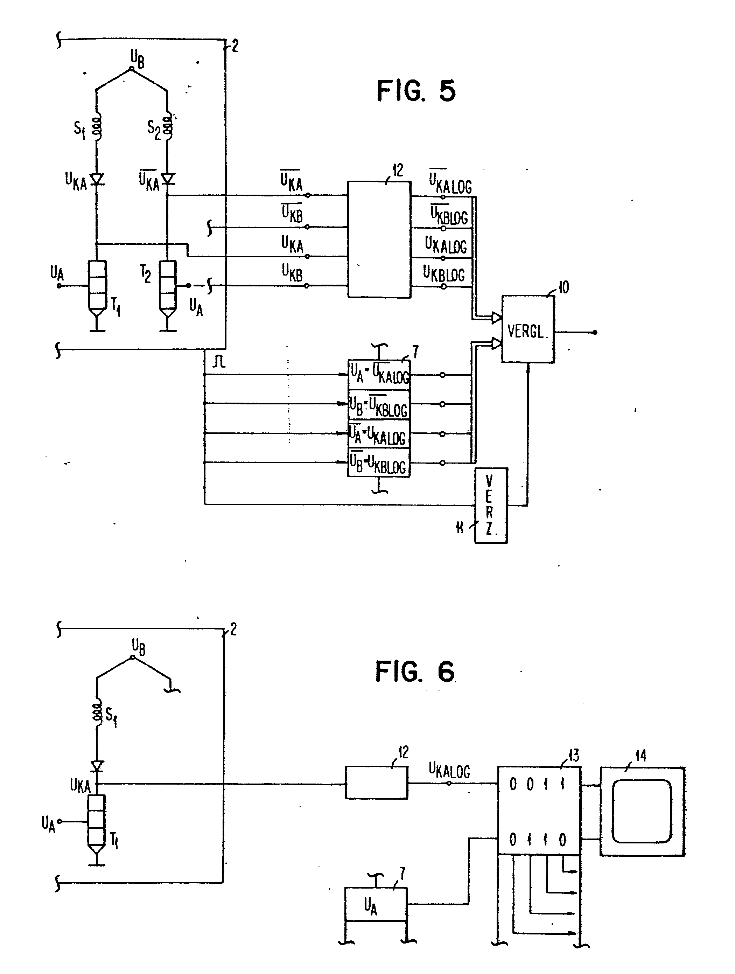

Fig. 5 zeigt im Prinzip die Überprüfung der einzelnen Treiberstufen des Treiberteils 2. Es ist dabei nur ein Teil des Treiberteils 2 mit den Treibertransistoren T1, T2, den Phasenwicklungen S1 und S2 und den Dioden D1 und D2 gezeigt, die zwischen einer Betriebsspannungsquelle $U_B$ und Erdpotential jeweils in Reihe eingeschaltet sind.

An den Kollektorelektroden der beiden Treibertransistoren T1 und T2 werden die Spannungen $U_{KA}$ bzw. $\bar{U}_{KA}$ abgenommen und einem Pegelumsetzer 12 zugeleitet, der daraus entsprechende logische Signale $\bar{U}_{KA\,LOG}$ und $U_{KA\,LOG}$ bildet. In gleicher Weise sind an den hier nicht gezeigten Treibertransistoren T3 und T4 die dort auftretenden Kollektorspannungen $\bar{U}_{KB}$ und $U_{KB}$ über Leitungen am Pegelumsetzer 12 verfügbar und werden ebenfalls in entsprechende logische Werte $\bar{U}_{KB\,LOG}$ und $U_{KB\,LOG}$ umgesetzt. Wie bei der Überprüfung der Steuerlogik enthält der Ringzähler 7 wiederum die entsprechenden Sollwerte. Der Ringzähler wird dabei in genau der gleichen Weise über die Schrittgeberimpulse fortgeschaltet, die außerdem über ein Verzögerungsglied 11 zur taktmäßigen Ansteuerung der Vergleichsschaltung 10 dienen. Tritt in einer der Stufen der Vergleichsschaltung 10 eine Ungleichheit zwischen den im Ringzähler 7 eingespeicherten Sollwerten und den vom Pegelumsetzer 12 gelieferten Sollwerten auf, so bedeutet dies, daß im Treiberteil eine der Treiberstufen defekt ist. Die Art des Defektes läßt sich auf diese Weise jedoch noch nicht feststellen. Andererseits kann man wegen der taktmäßigen Ansteuerung der Vergleichsschaltung 10 gleichzeitig damit die Synchronisation zwischen Schrittgeberimpulsen, Schrittschaltimpulsen und schrittweiser Weiterschaltung des Schrittschaltmotors überprüfen bzw. überwachen.

Die Diagnose, welche der Treiberstufen ausgefallen ist, läßt sich jedoch in einfacher Weise in einer Schaltung gemäß Fig. 6 durchführen. Dort sind der Einfachheit halber nur der Treibertransistor T1, die Diode D1 und die Phasenwicklung S1 in Reihe zwischen der Betriebsspannung $U_B$ und Erdpotential eingeschaltet gezeigt. Die Kollektorspannung $U_{KA}$ wird wiederum im Pegelumsetzer 12 in ein logisches Signal $U_{KA\,LOG}$ umgesetzt. Der im Ringzähler 7 eingespeicherte Sollwert $U_A$ wird dort ebenfalls abgenommen, und diese beiden logischen Werte werden einer Bit-Mustervergleichsschaltung 13 zugeführt, an die wahlweise ein Sichtgerät 14 oder ein anderes Anzeigegerät angeschlossen sein kann. Der Einfachheit halber sind für den Bit-Mustervergleich die in Frage kommenden Bit-Muster eingezeichnet. Wenn für die Treiberstufe 2 mit dem Treibertransistor T1 und der Phasenwicklung S1 die Bit-Kombination 01 oder 10 auftritt, so bedeutet dies, daß die Treiberstufe fehlerfrei arbeitet. Tritt jedoch die Bit-Kombination 00 auf, so bedeutet dies, daß im dargestellten Fall der Transistor T1 defekt ist und einen Kurzschluß aufweist. Tritt dagegen die Bit-Kombination 11 auf, so bedeutet dies, daß der Transistor T1 eine Unterbrechung aufweist.

Das Prinzip der Fehlerdiagnose mit Hilfe von Bit-Mustern, die einmal von einem Ringzähler und einmal von den tatsächlich auftretenden logischen Signalen oder Schaltzuständen abgeleitet werden, läßt sich beliebig erweitern. Eine sehr ins Einzelne gehende Analyse erhält man dann, wenn man die Bit-Muster speichert und sie über mehrere Schritte auswertet. Dabei könnte man auch feststellen, ob anstelle eines Fehlers in einem der Treibertransistoren T1—T4 eine Unterbrechung einer der Motorspulen S1—S4 oder einer der Dioden D1—D4 vorliegt. Normalerweise liegt z. B. die Betriebsspannung $U_B$ über der Motorspule S1 und die Diode D1 am Kollektor des Treibertransistors T1. Ist dieser gesperrt, dann ist die Spannung hoch, ist dieser leitend, dann ist die Spannung niedrig. Bei Wicklungsunterbrechung oder einem Fehler in der Diode ist die Spannung Null. Das heißt, nach Pegelumsetzung in logische Werte lassen sich die beiden Fälle nicht unterscheiden. Wenn allerdings bei zwei oder mehreren aufeinanderfolgenden Schritten stets eine logische Null auftritt, während sich die übrigen logischen Signale von Zyklus zu Zyklus ändern, dann liegt Spulen- oder Diodenunterbrechung vor, während dann, wenn in aufeinanderfolgenden Zyklen an einem Treibertransistor immer eine logische Eins auftritt, der Treibertransistor defekt sein muß. Diese Auswertung kann dabei in genau der gleichen Weise mit Hilfe logischer Schaltkreise oder aber auch über einen Mikrocode erfolgen.

Durch die neuartige, einfache Schaltung, die sich in allen ihren Teilen einschließlich der Treibertransistoren und der Dioden der Steuerlogik, des Ringzählers und der logischen Schaltglieder in integrierter Schaltungstechnik herstellen läßt, ergibt sich eine zuverlässig arbeitende Schaltungsanordnung für die ständige Betriebsüberwachung und Fehlerdiagnose eines über eine Steuerlogik und Treiberstufen an seinen Wicklungen durch gegeneinander phasenverschobene Schrittschaltimpulse ansteuerbaren Schrittschaltmotors. Dies hat die folgenden Vorteile: Die gesamte Betriebsüberwachung und Diagnose kann mit wenigen einfachen logischen Bausteinen durchgeführt werden. Die Fehlermeldung erfolgt spätestens bei dem nächsten Schrittgeberimpuls oder Rückkopplungsimpuls. Damit können weitere Schäden infolge des Fehlers an anderen Bauteilen vermieden werden. Der Fehlerort ist durch diese Selbstdiagnose leicht feststellbar und bringt daher erhebliche Einsparungen bei Wartung und Diagnose. Gleichzeitig erfolgt auch eine Synchronisationsüberwachung, die gerade bei Schrittschaltmotoren von nicht zu unterschätzender Bedeutung ist.

**Patentansprüche**

1. Schaltungsanordnung für die ständige Betriebsüberwachung und Fehlerdiagnose der Steuerschaltung für einen Schrittschaltmotor, dessen Wicklungen (S1, S2, S3, S4) über eine von Schrittgeberimpulsen angesteuerte Steuerlogik (1) und Treiberstufen (2) gegeneinander phasenverschobene Schrittschaltimpulse zugeführt werden, dadurch gekennzeichnet, daß ein die Sollwerte der Schrittschaltimpulse in logischer Form darstellender, mehrstufiger Ringzähler (7) vorgesehen ist, dessen Grundeinstellung vor dem Start des Motors aus den den einzelnen Stufen des Ringzählers (7) zugeführten Ausgangssignalen der Steuerlogik (1) und einem weiteren, den Stufen gemeinsam zugeleiteten Startsignal abgeleitet ist und dessen taktgesteuerte Fortschaltung aus den am Eingang der Steuerlogik liegenden Schrittgeberimpulsen abgeleitet ist, daß ferner eine durch die logischen Ausgangssignale des Ringzählers (7) einerseits und die Ausgangssignale der Steuerlogik (1) bzw. die von den Treiberstufen abgeleiteten logischen Ausgangssignale andererseits angesteuerte mehrstufige Vergleichsschaltung (10) vorgesehen ist und daß diese Vergleichsschaltung (10) durch von den Schrittgeberimpulsen abgeleitete Taktimpulse taktgesteuert ist.

2. Schaltungsanordnung nach Anspruch 1, dadurch gekennzeichnet, daß zur ständigen Überprüfung der Steuerlogik (1) die die Steuerspannungen ($U_A$, $U_B$, $\overline{U}_A$, $\overline{U}_B$) für die Treiberstufen liefernden Ausgänge der Steuerlogik (1) jeweils mit einer der Stufen der Vergleichsschaltung (10) verbunden sind, daß ferner die Ausgänge der jeweils entsprechenden Stufen des Ringzählers (7) an den gleichen Stufen der Vergleichsschaltung (10) angeschlossen sind und daß der Ringzähler (7) über die Schrittgeberimpulse unmittelbar fortschaltbar ist, während die Vergleichsschaltung (10) durch die gleichen Schrittgeberimpulse über ein Verzögerungsglied (11) taktgesteuert ist (Fig. 4).

3. Schaltungsanordnung nach Anspruch 1, dadurch gekennzeichnet, daß zur ständigen Überprüfung der Treiberstufen des Treiberteiles (2) an den Treiberstufen selbst abnehmbare, deren Schaltzustand kennzeichnende Signale nach Pegelumsetzung in entsprechende logische Werte den entsprechenden Stufen der Vergleichsschaltung (10) zuführbar sind, daß ferner die Ausgänge der jeweils entsprechenden Stufen des Ringzählers (7) an den gleichen Stufen der Vergleichsschaltung (10) angeschlossen sind, daß dabei die einzelnen Stufen des Ringzählers (7) durch die Schrittgeberimpulse fortschaltbar sind und daß dabei die Vergleichsschaltung (10) durch die gleichen Schrittgeberimpulse über ein Verzögerungsglied (11) taktgesteuert ist (Fig. 5).

4. Schaltungsanordnung nach Anspruch 3, dadurch gekennzeichnet, daß zur Fehlerdiagnose eine Auswerteschaltung (13) vorgesehen ist, in der aus einem logischen Vergleich der im Ringzähler liegenden logischen Werte jeder Stufe und den nach Pegelumsetzung (12) von den einzelnen Treiberstufen abgeleiteten logischen Werten für jede Treiberstufe unmittelbar eine von mehreren möglichen Fehlerbedingungen erkennbar ist.

5. Schaltungsanordnung nach einem der Ansprüche 1 bis 4, dadurch gekennzeichnet, daß für einen vier Phasenwicklungen (S1 – S4) aufweisenden Schrittschaltmotor die Steuerlogik (1) vier gegeneinander phasenverschobene logische Ausgangssignale abgibt, daß der Ringzähler (7), die Vergleichsschaltung (10) und ggf. der Pegelumsetzer (12) ebenfalls vierstufig aufgebaut sind.

**Claims**

1. Circuit arrangement for the continuous monitoring of the operation and fault diagnosis of the control circuit of a stepping motor, whose windings (S1, S2, S3, S4) receive stepping pulses phase-shifted relative to each other by a control logic (1) and driver stages (2) controlled by stepping control pulses, characterized in that a multi-stage ring counter (7) is provided for logically representing the desired values of the stepping pulses, whose basic setting, prior to starting the motor, is derived from the output signals of the control logic (1) which are fed to the individual stages of the ring counter (7) and from a further signal which is jointly applied to said stages, clock-controlled incrementation of said counter being effected as a function of the stepping control pulses applied to the input of the control logic, that, furthermore, a multi-stage compare circuit (10) is provided which is controlled by the logic output signals of the ring counter (7) on the one hand and by the logic output signals derived from the driver stages on the other, and that this compare circuit (10) is clock-controlled by clock pulses derived from said compare circuit (10).

2. Circuit arrangement according to claim 1, characterized in that for the continuous monitoring of the control logic (1), the outputs of the control logic (1) supplying the control voltages ($U_A$, $U_B$, $\overline{U}_A$, $\overline{U}_B$) for the driver stages are each connected to one of the stages of the compare circuit (10), that, furthermore, the outputs of the corresponding stages of the ring counter (7) are connected to the same stages of the compare circuit (10), and that the ring counter (7) is directly incrementable by stepping control pulses, while the compare circuit (10) is clock-controlled by the same stepping control pulses via a delay element (11) (Fig. 4).

3. Circuit arrangement according to claim 1, characterized in that for the continuous monitoring of the driver stages of the driver portion (2), signals indicating the switching state of the driver stages are derived from the latter after level conversion into corresponding logical values, said signals being applied to the corresponding stages of the compare circuit (10), that, furthermore, the outputs of the corresponding stages of the ring counter (7) are connected to the same stages of the compare circuit (10), that the individual stages of the ring counter (7) are incrementable by the stepping control pulses, with the compare circuit (10) being clock-controlled by the same stepping control pulses via a delay element (11) (Fig. 5).

4. Circuit arrangement according to claim 3, characterized in that for error diagnosis, an evaluator circuit (13) is provided, wherein by logically comparing the values of each stage, which are contained in the ring counter, and after level conversion (12) of the logical values derived from the individual driver stages, one of several possible error conditions can be directly detected for each driver stage.

5. Circuit arrangement according to any one of the claims 1 to 4, characterized in that for a stepping motor comprising four phase windings (S1 — S4), the control logic (1) emits four logical output signals phase-shifted relative to each other, that the ring counter (7), the compare circuit (10) and, if necessary, the level converter (12) also have four stages.

## Revendications

1. Montage pour la surveillance continue du fonctionnement et le diagnostic d'erreurs du circuit de commande d'un moteur pas à pas, aux enroulements (S1, S2, S3, S4) duquel des impulsions déphasées entre elles de commutation pas à pas sont appliquées par une logique de commande (1) et des étages pilotes (2) commandés par des impulsions de pas, ledit montage étant caractérisé en ce qu'il est prévu un compteur en anneau (7) à plusieurs étages qui représente les valeurs de consigne des impulsions de pas sous forme logique, dont le réglage de base avant le démarrage du moteur est dérivé des signaux de sortie de la logique de commande (1), transmis aux divers étages du compteur en anneau (7), et d'un signal de démarrage transmis en commun aux étages, et sa progression commandée par horloge est dérivée des impulsions de pas appliquées à l'entrée de la logique de commande; un circuit comparateur (10) à plusieurs étages attaqué par les signaux de sortie logiques du compteur en anneau (7) d'une part et les signaux de sortie de la logique de commande (1) ou les signaux de sortie logiques dérivés des étages pilotes d'autre part; et ledit circuit comparateur (10) est cadencé par des impulsions d'horloge dérivées des impulsions de pas.

2. Montage selon revendication 1, caractérisé en ce que pour le contrôle continu de la logique de commande (1), les sorties de cette dernière délivrant les tensions de commande ($U_A$, $U_B$, $\bar{U}_A$, $\bar{U}_B$) aux étages pilotes sont reliées chacune à l'un des étages du circuit comparateur (10); les sorties des étages du compteur en anneau (7) correspondant respectivement sont reliées aux mêmes étages du circuit comparateur (10); et les impulsions de pas font progresser directement le compteur en anneau (7), tandis que le circuit comparateur (10) est cadencé par les mêmes impulsions de pas, par l'intermédiaire d'une ligne de retard (11) (figure 4).

3. Montage selon revendication 1, caractérisé en ce que pour le contrôle continu des étages pilotes de la partie pilote (2), des signaux prélevés sur les étages pilotes et caractérisant leur état sont transmis, après conversion de niveau, sous forme de valeurs logiques équivalentes aux étages correspondants du circuit comparateur (10); les sorties des étages du compteur en anneau (7) correspondant respectivement sont reliées aux mêmes étages du circuit comparateur (10); les impulsions de pas font progresser les divers étages du compteur en anneau (7); et le circuit comparateur (10) est cadencé par les mêmes impulsions de pas, par l'intermédiaire d'une ligne de retard (11) (Figure 5).

4. Montage selon revendication 3, caractérisé en ce qu'un circuit d'évaluation (13) est prévu pour le diagnostic des erreurs, dans lequel une comparaison logique des valeurs logiques de chaque étage, contenues dans le compteur en anneau, et des valeurs logiques dérivées des divers étages pilotes, après conversion de niveau (12), permet de déceler une parmi pulsieurs conditions d'erreur possibles directement pour chaque étage pilote.

5. Montage selon une quelconque des revendications 1 à 4, caractérisé en ce que pour un moteur pas à pas comportant quatre enroulements de phase (S1 — S4), la logique de commande (1) délivre quatre signaux de sortie logiques déphasés entre eux; et le compteur en anneau (7), le circuit comparateur (10) et le cas échéant le convertisseur de niveau (12) sont également réalisés avec quatre étages.

# FIG. 1

# FIG. 2

## FIG. 3

## FIG. 4

## FIG. 5

## FIG. 6